# EUROPÄISCHE PATENTSCHRIFT

(11) **EP 0 686 645 B1**
(45) Veröffentlichungstag und Bekanntmachung des Hinweises auf die Patenterteilung: **30.07.1997**
(21) Anmeldenummer: 95108203.1
(22) Anmeldetag: 30.05.1995
(51) Int. Cl.: C08F 10/00

(54) **Verfahren zur Aufbereitung von Katalysatorsystemen vom Typ der Ziegler-Natta-Katalysatoren**
Process for the preparation of catalyst systems of the Ziegler-Natta type
Procédé de préparation de systèmes catalytiques du type Ziegler-Natta

(30) Priorität: 07.06.1994 DE 4419845
(43) Veröffentlichungstag der Anmeldung: 13.12.1995
(73) Patentinhaber: BASF Aktiengesellschaft, 67063 Ludwigshafen (DE)
(72) Erfinder: Kölle, Peter, Dr., D-67098 Bad Dürkheim (DE); Müller, Patrik, Dr., D-67661 Kaiserslautern (DE); Hemmerich, Rainer, Dr., D-67269 Grünstadt (DE); Kolk, Erich, Dr., D-67098 Bad Dürkheim (DE)

(56) Entgegenhaltungen:
- EP-A- 0 030 742
- EP-A- 0 518 604
- DATABASE WPI Derwent Publications Ltd., London, GB; AN 79-78090B 'Stereospecific polyolefin prodn.' & JP-A-54 118 484 (MITSUBISHI PETROCHEM KK)
- DATABASE WPI Derwent Publications Ltd., London, GB; AN 92-263052 'Solid catalysts for polymerisation of olefins' & JP-A-04 178 406 (SHOWA DENKO KK)
- DATABASE WPI Derwent Publications Ltd., London, GB; AN 93003886 'Catalysts for polymerization of olefins...' & JP-A-04 331 210 (CHISSO CORPORATION)
- DATABASE WPI Derwent Publications Ltd., London, GB; AN 79-78090B 'Stereospecific polyolefin prodn.' & JP-A-54 118 484
- DATABASE WPI Derwent Publications Ltd., London, GB; AN 92-263052 'Solid catalysts for polymerisation of olefins' & JP-A-04 178 406
- DATABASE WPI Derwent Publications Ltd., London, GB; AN 93003886 'Catalysts for polymerization of olefins...' & JP-A-04 331 210

## Beschreibung

Die vorliegende Erfindung betrifft ein Verfahren zur Aufbereitung von Katalysatorsystemen vom Typ der Ziegler-Natta-Katalysatoren, enthaltend als aktive Bestandteile
a) eine titanhaltige Feststoffkomponente, die neben einer Verbindung des Titans noch wenigstens eine Elektronendonorverbindung enthält und in Form einer Suspension in einem inerten Lösungsmittel vorliegt, sowie als Cokatalysator
b) eine Aluminiumverbindung und
c) gegebenenfalls weitere Elektronendonorverbindungen.

Katalysatorsysteme vom Typ der Ziegler-Natta-Katalysatoren sind u.a. aus der EP-B 14523, der EP-A-23425, der EP-A 45975, der US-A 4 857 613 und der EP-A 195 497 bekannt. Diese Systeme werden insbesondere zur Polymerisation von α-Olefinen verwendet und enthalten u.a. Verbindungen des mehrwertigen Titans, Aluminiumhalogenide und/oder -alkyle, sowie Elektronendonorverbindungen, insbesondere Siliciumverbindungen, Ether, Carbonsäureester, Ketone und Lactone, die einerseits in Verbindung mit der Titanverbindung und andererseits als Cokatalysator verwendet werden.

Um eine wirtschaftliche Polyolefinproduktion zu gewährleisten, müssen solche Katalysatorsysteme u.a. eine hohe Produktivität aufweisen. Darunter versteht man das Verhältnis der gebildeten Mengen an Polymerisat zur Menge des eingesetzten Katalysators. Weiterhin ist es erforderlich, daß die dabei erhältlichen Polymerisate möglichst stereospezifisch ausgerichtet sind, d.h. der Anteil nichtisotaktischer Molekülstrukturen in Homopolymerisaten sollte 2 bis 2,5 % nicht übersteigen.

Die aus dem Stand der Technik bekannten Katalysatorsysteme werden in der Regel nach mehrstufigen Verfahren in inerten Lösungsmitteln, beispielsweise in Alkanen hergestellt. Aus der US-A 4857613 ist u.a. ein zweistufiges Verfahren bekannt, wobei in n-Heptan als Lösungsmittel gearbeitet wird. Weitere Herstellungsverfahren für Ziegler-Natta-Katalysatoren sind u.a. in der EP-A 30 742, der JP-A 54 118 484 und der JP-A 4 178 406 beschrieben.

Nachteilig an diesen Herstellverfahren ist u.a., daß die Katalysatoren in suspendierter Form anfallen. Dies bereitet Probleme bei der Dosierung und beim Versand der Katalysatoren auf den üblichen Verkehrswegen, da vor der Dosierung des Katalysatorsystems die Suspension wieder neu homogenisiert werden muß. Weiterhin wäre es aus verfahrenstechnischen Gründen wünschenswert, wenn derartige Katalysatorsysteme in rieselfähiger Form anfallen würden, was bei suspendierten Katalysatoren naturgemäß nicht der Fall ist.

Der vorliegenden Erfindung lag daher die Aufgabe zugrunde, den geschilderten Nachteilen abzuhelfen und ein neues Verfahren zur Herstellung von Katalysatoren vom Typ der Ziegler-Natta-Katalysatoren zu entwickeln, mit welchem gut rieselfähige und lagerfähige Katalysatoren erhalten werden können, die überdies noch eine hohe Produktivität und Stereospezifität aufweisen.

Demgemäß wurde ein Verfahren zur Aufbereitung von Katalysatorsystemen vom Typ der Ziegler-Natta-Katalysatoren entwickelt, die als aktive Bestandteile
a) eine titanhaltige Feststoffkomponente, die neben einer Verbindung des Titans noch wenigstens eine Elektronendonorverbindung enthält und in Form einer Suspension in einem inerten Lösungsmittel vorliegt, sowie als Cokatalysator
b) eine Aluminiumverbindung und
c) gegebenenfalls weitere Elektronendonorverbindungen aufweisen
welches dadurch gekennzeichnet ist, daß nach der Herstellung der titanhaltigen Feststoffkomponente a) das in der Suspension vorliegende inerte Lösungsmittel dadurch entfernt wird, daß man zunächst in einem ersten Schritt die Suspension filtriert und anschließend in einem zweiten Schritt durch Anlegen eines Druckunterschiedes bei Temperaturen von nicht mehr als 100°C dem filtrierten Material weiteres Lösungsmittel entzieht, wobei die Filtration der Suspension im ersten Schritt unter Verwendung eines Metallpanzertressengewebes als Siebgewebe mit einer Maschenweite von 10 bis 30 µm durchgeführt wird.

Die in Betracht kommenden Katalysatorsysteme vom Typ der Ziegler-Natta-Katalysatoren enthalten üblicherweise eine titanhaltige Feststoffkomponente a) sowie als Cokatalysator noch eine Aluminiumverbindung b) und gegebenenfalls noch Elektronendonorverbindungen c).

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente noch einen feinteiligen Träger, wofür sich Silicium- und Aluminiumoxide, sowie Aluminiumsilicate gut bewährt haben. Als besonders bevorzugter Träger wird SiO₂·aAl₂O₃ verwendet, wobei a für einen Wert im Bereich von 0 bis 2, insbesondere im Bereich von 0 bis 0,5 steht.

Weiter werden bei der Herstellung der titanhaltigen Feststoffkomponente vorteilhaft Verbindungen des Magnesiums eingesetzt. Als solche kommen Magnesiumhalogenide, Magnesiumaryle, Magnesiumalkyle und Magnesiumalkoxy-, sowie Magnesiumaryloxyverbindungen in Betracht, wobei insbesondere Magnesiumdichlorid, Magnesiumdibromid und Magnesium-(C₁-C₁₀-alkyl)-Verbindungen verwendet werden. Daneben kann die titanhaltige Feststoffkomponente a) noch Halogen, bevorzugt Chlor oder Brom, aufweisen.

Darüber hinaus enthält die titanhaltige Feststoffkomponente a) noch Elektronendonorverbindungen wie mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Elektronendonorverbindungen, die bevorzugt innerhalb der titanhaltigen Feststoffkomponente a) enthalten sind, sind insbesondere Carbonsäureanhydride und Carbonsäureester.

Zu den bevorzugten Carbonsäureanhydriden bzw. Carbonsäureestern zählen beispielsweise Phthalsäurederivate der allgemeinen Formel (I) 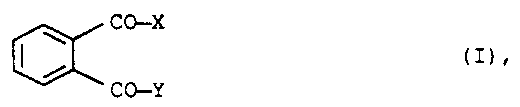 wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y C₁-C₈-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner C₆- bis C₁₀-Phenole.

Die titanhaltigen Feststoffkomponente kann nach an sich bekannten Methoden hergestellt werden. Beispiele dafür sind u.a. in der EP-A 45 975, der EP-A 45 977, der EP-A 86 473, der EP-A 171 200, der US-A 4 857 613, der GB-A 2 111 066 und der DE-A 40 04 087 beschrieben.

Vorzugsweise wird zur Herstellung der titanhaltigen Feststoffkomponente a) folgendes zweistufige Verfahren verwendet.

In der ersten Stufe versetzt man zunächst einen feinteiligen Träger, bevorzugt SiO₂·aAl₂O₃ - wobei a für eine Zahl im Bereich von 0 bis 2, insbesondere im Bereich von 0 bis 0,5 steht - der im allgemeinen einen Teilchendurchmesser von 0,1 bis 1000 µm, insbesondere von 10 bis 300 µm, ein Porenvolumen von 0,1 bis 10 cm³/g, insbesondere von 1,0 bis 4,0 cm³/g, und eine spezifische Oberfläche von 10 bis 1000 m²/g, insbesondere von 100 bis 500 m²/g, aufweist, mit einer Lösung der magnesiumhaltigen Verbindung in einem flüssigen Alkan, wonach man dieses Gemisch 0,5 bis 2 Stunden lang bei einer Temperatur zwischen 10 und 120°C rührt. Vorzugsweise setzt man pro Mol SiO₂·aAl₂O₃ 0,1 bis 1 mol der Magnesiumverbindung ein. Anschließend gibt man unter ständigem Rühren ein Halogen oder einen Halogenwasserstoff, insbesondere Chlor oder Chlorwasserstoff, im wenigstens zweifachen, bevorzugt im wenigstens fünffachen molaren Überschuß, bezogen auf die magnesiumhaltige Verbindung hinzu. Nach etwa 30 bis 120 Minuten fügt man diesem Reaktionsprodukt bei einer Temperatur zwischen 10 und 150°C ein C₁-C₈-Alkanol, insbesondere Ethanol, ein Halogenid oder ein Alkoholat des drei- oder vierwertigen Titans, insbesondere Titantetrachlorid, sowie einen Carbonsäureester hinzu. Dabei setzt man pro Mol Magnesium aus der magnesiumhaltigen Verbindung 1 bis 5 Mol, insbesondere 2 bis 4 Mol, Alkanol, 2 bis 20 Mol, insbesondere 4 bis 10 Mol, des drei- oder vierwertigen Titans und 0,01 bis 1 Mol, insbesondere 0,1 bis 0,5 Mol, des Carbonsäureesters ein. Das Gemisch wird wenigstens eine Stunde lang bei einer Temperatur zwischen 10 und 150°C gerührt, der so erhaltene feste Stoff anschließend abfiltriert und mit einem C₇-C₁₀-Alkylbenzol, insbesondere Ethylbenzol, gewaschen.

In der zweiten Stufe extrahiert man den aus der ersten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid geringer ist als 2 Gew.-%.

Die auf diese Weise erhältliche titanhaltige Feststoffkomponente a) wird zusammen mit Cokatalysatoren als Ziegler-Natta-Katalysatorsystem verwendet. Als Cokatalysatoren kommen dabei insbesondere Aluminiumverbindungen in Frage. Vorzugsweise werden neben einer Aluminiumverbindung b) noch Elektronendonorverbindungen c) als weitere Cokatalysatoren eingesetzt.

Als Aluminiumverbindung b) kommen dabei neben Trialkylaluminium auch solche Verbindungen in Betracht, bei denen eine Alkylgruppe durch eine Alkoxygruppe oder durch ein Halogenatom, beispielsweise durch ein Chlor- oder ein Bromatom, ersetzt ist. Bevorzugt werden Trialkylaluminiumverbindungen verwendet, deren Alkylgruppen jeweils 1 - 8 C-Atome aufweisen, beispielsweise Trimethyl, Triethyl- oder Methyldiethylaluminium.

Neben der titanhaltigen Feststoffkomponente a) und der Aluminiumverbindung b) enthalten Ziegler-Natta-Katalysatorsysteme bevorzugt ferner noch Elektronendonorverbindungen c) wie mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Elektronendonorverbindungen, die bevorzugt als Cokatalysatoren verwendet werden, sind siliciumorganische Verbindungen der Formel II

R¹ ₙSi(OR²)₄₋ₙ (II)

wobei
- R¹: eine C₁-C₂₀-Alkylgruppe, eine 5- bis 7-gliedrige Cycloalkylgruppe, die ihrerseits eine C₁-C₁₀-Alkylgruppe tragen kann, oder eine C₆-C₂₀-Aryl- oder Arylalkylgruppe,
- R²: eine C₁-C₂₀-Alkylgruppe bedeutet und
- n: für die Zahlen 1, 2 oder 3 steht.

Besonders bevorzugt werden dabei solche Verbindungen, in denen R¹ eine C₁-C₈-Alkylgruppe oder eine 5- bis 7-gliedrige Cycloalkylgruppe, sowie R² eine C₁-C₄-Alkylgruppe bedeutet und n für die Zahl 2 steht.

Unter diesen Verbindungen sind insbesondere Dimethoxydiisopropylsilan, Dimethoxyisobutylisopropylsilan, Dimethoxydiisobutylsilan, Diethoxyisobutylisopropylsilan, Dimethoxysek.butylisopropylsilan, Dimethoxyisobutylsek.butylsilan, Dimethoxydisek.butylsilan, Dimethoxycyclopentylmethylsilan und Dimethoxydicyclopentylsilan hervorzuheben.

Bevorzugt sind solche Ziegler-Natta-Katalysatorsysteme, bei denen das Atomverhältnis zwischen Aluminium aus der Aluminiumverbindung b) und Titan aus der titanhaltigen Feststoffkomponente a) 10 : 1 bis 800 : 1, insbesondere 20 : 1 bis 200 : 1, und das Molverhältnis zwischen der Aluminiumverbindung b) und der weiteren Elektronendonorverbindung c) 1 : 1 bis 100 : 1, insbesondere 2 : 1 bis 80 : 1 beträgt.

Gemäß dem erfindungsgemäßen Aufbereitungsverfahren von Katalysatorsystemen vom Typ der Ziegler-Natta-Katalysatoren wird nach der Herstellung der titanhaltigen Feststoffkomponente a) das in der Suspension vorliegende inerte Lösungsmittel dadurch entfernt, daß man zunächst in einem ersten Schritt die Suspension filtriert. Die Filtration wird dabei mit Hilfe üblicher Filterapparaturen, beispielsweise inertisierbare und heizbare Druckfilternutschen, unter üblichen Druck- und Temperaturbedingungen, beispielsweise bei 5 bis 500 mbar und 20 bis 100°C durchgeführt. Bevorzugt erfolgt die Filtration unter einem Druck von 50 bis 450 mbar und bei Temperaturen von 30 bis 70°C. Vorteilhaft kann bei der Filtration ein Metallpanzertressengewebe als Siebgewebe mit einer Maschenweite von 10 bis 30 µm verwendet werden. Die Filtration kann insbesondere auch durch Anlegen eines Stickstoffstroms, oder eines anderen Inertgasstroms mit einem Überdruck von 1 bis 5 bar durchgeführt werden.

Auf diese Weise ist es möglich, etwa 50 bis 70 % des ursprünglich vorhandenen Lösungsmittels zu entfernen. Nach Beendigung des ersten Schrittes enthält der übrigbleibende Filterkuchen noch bis zu 30 bis 50 Gew.-% Lösungsmittel. Dessen Anteil kann nun in einem zweiten Schritt, der sich der Filtration üblicherweise unmittelbar anschließt, weiter reduziert werden.

Im zweiten Schritt wird zum einen durch Anlegen eines Druckunterschiedes dem filtrierten Material weiteres Lösungsmittel entzogen.

Dies kann unter anderem dadurch erfolgen, daß im zweiten Schritt das Lösungsmittel durch Anlegen des Unterdruckes an der, der lösungsmittelhaltigen Feststoffkomponente a) abgewandten Seite der Filterapparatur, von 5 bis 500 mbar, insbesondere von 50 bis 450 mbar und bei einer Temperatur von 20 bis 100°C, insbesondere von 30 bis 70°C, destillativ entfernt wird. Dieser zweite Schritt kann ebenfalls mit Hilfe üblicher vakuumfester Filterapparaturen, beispielsweise Druckfilternutschen durchgeführt werden. Dabei hat es sich als vorteilhaft erwiesen, daß die zum Anlegen eines Unterdrucks erforderliche Druckabsenkung in wenigstens zwei Teilschritten mit unterschiedlicher Absenkungsrate über einen Zeitraum von insgesamt 1 bis 10 Stunden, insbesondere über einen Zeitraum von insgesamt 2 bis 8 Stunden, erfolgt. Das auf diese Weise abkondensierte Lösungsmittel wird vorteilhaft in einem gekühlten Abscheider auskondensiert.

Der angelegte Unterdruck kann nach Beendigung der destillativen Entfernung des Lösungsmittels durch Zufuhr von Inertgasen, beispielsweise Stickstoff, wieder beseitigt werden. Dieser Schritt wird üblicherweise über einen Zeitraum von 0,1 bis 1,0 Stunden, insbesondere von 0,2 bis 0,5 Stunden, durchgeführt.

Weiterhin kann das Lösungsmittel entsprechend dem zweiten Schritt des erfindungsgemäßen Aufbereitungsverfahrens auch dadurch entfernt werden, daß man durch Anlegen eines Inertgasstromes mit einem Überdruck von 1 bis 5 bar diesen gegen den Anströmboden eines eines Wirbelrohrs, in welchem sich die lösungsmittelhaltige Feststoffkomponente a) befindet, bläst. Der Inertgasstrom weist dabei eine Gasgeschwindigkeit von vorzugsweise 5 bis 100 cm/sek. auf. Zu diesem Zweck füllt man nach Beendigung der Filtration im ersten Schritt die noch Lösungsmittel enthaltende Feststoffkomponente a) in ein Wirbelrohr, welches u.a. einen Stützboden aus einer Lochplatte mit einem Lochdurchmesser von etwa 10 bis 50 mm enthält. Vorzugsweise kann der Stützboden noch mit einem Metallpanzertressengewebe als Siebgewebe bespannt sein, wobei dieses eine Maschenweite von etwa 10 bis 30 µm aufweist. Als Wirbelrohre kommen die in der Technik gebräuchlichen Wirbelrohre in Betracht, wobei Länge und Durchmesser des Rohres entsprechend variiert werden können.

Nach dem erfindungsgemäßen Aufbereitungsverfahren wird das Lösungsmittel im zweiten Schritt vorzugsweise dadurch entfernt, daß das Inertgas, beispielsweise Stickstoff, mit einer Geschwindigkeit von 5 bis 100 cm/sek., insbesondere von 10 bis 30 cm/sek. dem Anströmboden zugeführt wird. Dabei kann es sich empfehlen, das Inertgas auf Temperaturen von etwa 25 bis 70°C vorzuheizen.

Das Inertgas durchströmt auf diese Weise das Festbett aus lösungsmittelhaltiger Feststoffkomponente a) und trägt über den Anströmboden und der Lochplatte Lösungsmittel aus, welches vorteilhaft in einem gekühlten Abscheider auskondensiert wird. Dieser in einem Wirbelrohr durchgeführte zweite Schritt dauert üblicherweise 1 bis 10 Stunden, insbesondere 1,5 bis 8 Stunden.

Weiterhin kann das im Filterkuchen nach dem ersten Schritt noch verbliebene Restlösungsmittel entsprechend dem zweiten Schritt des erfindungsgemäßen Verfahrens auch dadurch entfernt werden, daß man durch Anlegen eines auf 30 bis 70°C vorgeheizten Inertgasstromes diesen vorzugsweise mit einer Geschwindigkeit von 1 bis 10 m³/h von oben her durch den Filterkuchen drückt. Dies erfolgt vorzugsweise über einen Zeitraum von 1 bis 10 Stunden, wobei als Inertgas insbesondere Stickstoff verwendet wird.

Nach Beendigung des zweiten Schrittes entsprechend dem erfindungsgemäßen Aufbereitungsverfahren fällt die aufbereitete titanhaltige Feststoffkomponente a), als rieselfähiges Pulver mit einem Restgehalt an Lösungsmittel von etwa 1 bis 30 Gew.-%, insbesondere von 1,5 bis 15 Gew.-%, an. Der zweite Schritt des erfindungsgemäßen Aufbereitungsverfahren kann sowohl als destillatives Verfahren bei abgesenktem Druck und erhöhten Temperaturen als auch als Ausblasverfahren durch Anlegen eines Inertgasstromes unter Überdruckbedingungen erfolgen.

Mit Hilfe des erfindungsgemäßen Aufbereitungsverfahrens sind gut rieselfähige und lagerfähige titanhaltige Feststoffkomponenten a) erhältlich. Das Verfahren eignet sich für die in der Technik gebräuchlichen Lösungsmittel auf der Basis von aliphatischen und aromatischen Lösungsmitteln sowie auch für polare Lösungsmittel. Beispiele für derartige Lösungsmittel sind u.a. n-Hexan, n-Heptan, n-Octan oder Toluol. Das erfindungsgemäße Verfahren ist ohne hohen apparativen und verfahrenstechnischen Aufwand durchführbar.

Die dabei erhältliche titanhaltige Feststoffkomponente a) wird anschließend mit geeigneten Cokatalysatoren, beispielsweise Aluminiumverbindungen b) sowie gegebenenfalls Elektronendonorverbindungen c) zu Katalysatorsystemen vom Typ der Ziegler-Natta-Katalysatoren umgesetzt. Diese ebenfalls erfindungsgemäßen Katalysatorsysteme sind stabiler und lagerfähiger als herkömmliche Katalysatorsysteme und eignen sich insbesondere zur Polymerisation von C₂- bis C₁₀-Alk-1-enen, beispielsweise von Ethylen, Propylen oder But-1-en. Die Polymerisation von C₂- bis C₁₀-Alk-1-enen wird dabei üblicherweise bei Temperaturen von 40 bis 100°C, insbesondere von 50 bis 90°C, Drücken von 20 bis 100 bar, insbesondere bei Drücken von 25 bis 50 bar und mittleren Verweilzeiten des Reaktionsgemisches von 0,5 bis 5 Stunden, insbesondere von 1,0 bis 4 Stunden durchgeführt. Die erfindungsgemäßen Katalysatorsysteme zeichnen sich u.a. auch durch eine hohe Produktivität und Stereospezifität aus.

### Beispiele

### Beispiel 1

### I. Herstellung einer titanhaltigen Feststoffkomponente a)

Die titanhaltige Feststoffkomponente a) wurde nach dem folgenden zweistufigen Verfahren hergestellt:

Dabei versetzte man in einer ersten Stufe SiO₂, welches einen Teilchendurchmesser von 20 bis 45 µm, ein Porenvolumen von 1,75 cm³/g und eine Oberfläche von 320 m²/g aufwies, mit in n-Heptan gelöstem Butyl-octylmagnesium, wobei pro Mol SiO₂·0,3 mol der Magnesiumverbindung eingesetzt wurden. Die Reaktionsmischung wurde 1,5 Stunden lang bei 90°C gerührt, danach auf 40°C abgekühlt und anschließend wurde die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt wurde mit n-Heptan versetzt und anschließend wurde unter ständigem Rühren 3 Mol Ethanol, bezogen auf 1 Mol Magnesium, hinzugefügt. Dieses Gemisch wurde 1,5 Stunden bei 80°C gerührt und danach mit 6 Mol Titantetrachlorid und 0,5 Mol Phthalsäuredi-n-butylester, jeweils bezogen auf 1 Mol Magnesium, versetzt. Das Reaktionsgemisch wurde weitere zwei Stunden gerührt, wonach der Feststoff vom Lösungsmittel durch Filtration abgetrennt wurde.

Das so erhaltene Produkt extrahiert man vier Stunden lang bei 125°C mit einer 15 gew.-%igen Lösung von Titantetrachlorid in Ethylbenzol. Danach wurde das Festprodukt durch Filtration vom Extraktionsmittel getrennt und so lange mit n-Heptan gewaschen, bis dieses nur mehr 0,3 Gew.-% Titantetrachlorid enthielt.

Die daraus resultierende titanhaltige Feststoffkomponente fiel als Suspension in n-Heptan an und enthielt 3,7 Gew.-% Titan, 7,5 Gew.-% Magnesium und 28,3 Gew.-% Chlor.

### II. Aufbereitung der titanhaltigen Feststoffkomponente

8 kg der nach (I) erhaltenen Feststoffsuspension wurde unter Stickstoffspülung in eine Druckfilternutsche (NV = 60) der Fa. Löffler eingefüllt. Das aufgespannte Siebgewebe bestand aus einem Metallpanzertressengewebe mit einer maximalen Maschenweite von 20 µm.

Unter Stickstoffüberdruck wurde zunächst das Lösungsmittel abfiltriert und danach wurde der Mantel der Druckfilternutsche mit Wasser als Wärmeträger auf +60°C aufgeheizt. Nachdem die Innentemperatur +50°C überschritten hatte, wurde der Druck in der Filternutsche in zwei Schritten zuerst von 1026 auf 450 mbar in 20 min. und anschließend von 450 auf 150 mbar in 300 min abgesenkt. Das abkondensierte Lösungsmittel wurde in einem auf -40°C gekühlten Abscheider gesammelt. Die Destillationsrate variierte in einem Bereich von 0,5 bis 5,0 l/h. Es wurde insgesamt 12,3 l Kondensat erhalten. Am Ende der Druckrampe wurde das Vakuum der Druckfilternutsche mit Stickstoff gebrochen. Der getrocknete Katalysator wurde als leicht rieselfähiges Pulver erhalten, der Restlösungsmittelgehalt betrug 12 Gew.-% n-Heptan.

### III. Polymerisation

Ein Stahlautoklav mit einem Nutzvolumen von 10 l und ausgerüstet mit einem Blattrührer wurde mit 50 g eines Propylenhomopolymerisats mit einem Schmelzflußindex von 8,0 g/10 min, nach DIN 53735 bei 230°C und 2,16 kg, 10 mmol Triethylaluminium, in Form einer 1 molaren Lösung in n-Heptan, 1 mmol Dimethoxyisobutylisopropylsilan, in Form einer 1 molaren Lösung in n-Heptan, 5 NL Wasserstoff und schließlich 100 mg der oben beschriebenen Katalysatorkomponente a) bei 30°C beschickt. Die Reaktortemperatur wurde innerhalb von 10 min. auf 75°C, parallel dazu der Reaktordruck durch Aufpressen von gasförmigem Propylen auf 28 bar gebracht.

Die Polymerisation wurde nach Erreichen der o.g. Reaktionsbedingungen unter ständigem Rühren bei 75°C und 28 bar innerhalb von 75 min. durchgeführt. Verbrauchtes Monomer wurde kontinuierlich durch Frisches ersetzt.

Die erzielte Produktivität des Katalysatorsystems und die Stereospezifität des erhaltenen Propylenpolymerisats, ausgedrückt durch den heptanlöslichen Anteil, können der nachfolgenden Tabelle entnommen werden.

### Beispiel 2

4 kg der im Beispiel 1 (I) hergestellten Feststoffsuspension a) wurden unter Stickstoffspülung in ein Wirbelrohr mit einer Länge von 1200 mm und einem Durchmesser der Bohrungen von 250 mm eingeführt. Das Wirbelrohr enthielt einen Stützboden, bestehend aus einer Lochplatte mit einem Durchmesser von 15 mm und bespannt mit einem Metallpanzertressengewebe einer maximalen Maschenweite von 20 µm.

Im ersten Schritt des Aufbereitungsverfahrens wurde zunächst unter Stickstoffüberdruck die Suspension einer Filtration unterworfen. Anschließend wurde im zweiten Schritt des Aufbereitungsverfahrens ein auf 30°C vorgewärmter Stickstoffstrom mit einer Geschwindigkeit von 10 cm/sek. gegen den Anströmboden durch das, die Suspension enthaltende Festbett geblasen.

Das ausgetragene Lösungsmittel wurde in einem auf -78°C gekühlten Abscheider gesammelt. Es wurden 6,3 l Lösungsmittel erhalten. Nach 240 min. wurde der Trocknungsprozeß unterbrochen. Ein gut rieselfähiges Pulver mit einem Restheptangehalt von 1,7 Gew.-% wurde erhalten. Die erhaltene Feststoffkomponente a) wurde danach einer Propylenpolymerisation analog Beispiel 1 (III) unterworfen, Die entsprechenden Ergebnisse für das Beispiel 2 sind in der nachfolgenden Tabelle enthalten.

### Beispiel 3

Das Beispiel 1 wurde unter ansonsten identischen Bedingungen wiederholt, wobei der Schritt II dieses Beispiels jetzt so abgeändert wurde, daß nach Abfiltrieren des n-Heptans ein auf 70°C aufgeheizter Stickstoffstrom mit einer Geschwindigkeit von 5 m³/h (Menge bezogen auf 25°C) insgesamt 4 Stunden lang durchgeleitet wurde.

Der getrocknete Katalysator wies einen Restlösungsmittelgehalt von 6 Gew.-% n-Heptan auf.

### Vergleichsbeispiel A

Das Beispiel 2 wurde unter analogen Bedingungen wiederholt, mit der Ausnahme, daß das Wirbelrohr von außen so beheizt wurde, daß die Entfernung des Lösungsmittels bei einer Temperatur im Festbett von 160°C erfolgte. Der Restheptangehalt des erhaltenen Feststoffkomponente a) betrug 0,5 Gew.-%.

Die auf diese Weise erhaltene Feststoffkomponente a) wurde danach einer Propylenpolymerisation analog dem Beispiel 1 (III) unterworfen. Die entsprechenden Ergebnisse für das Vergleichsbeispiel A sind in der nachfolgenden Tabelle aufgeführt.

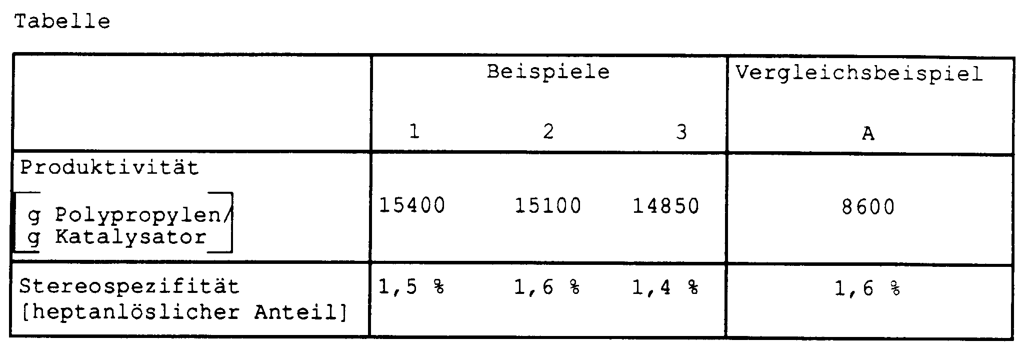

Aus der Tabelle geht u.a. hervor, daß die nach dem erfindungsgemäßen Verfahren erhaltenen Katalysatorsysteme gegenüber den Katalysatorsystemen, deren Lösungsmittel nach einem weniger schonenden Verfahren (Temperaturen > 100°C) entfernt wurden, u.a. eine höhere Produktivität aufweisen.

## Patentansprüche

1. Verfahren zur Aufbereitung von Katalysatorsystemen vom Typ der Ziegler-Natta-Katalysatoren, enthaltend als aktive Bestandteile
a) eine titanhaltige Feststoffkomponente, die neben einer Verbindung des Titans noch wenigstens eine Elektronendonorverbindung enthält und in Form einer Suspension in einem inerten Lösungsmittel vorliegt, sowie als Cokatalysator
b) eine Aluminiumverbindung und
c) gegebenenfalls weitere Elektronendonorverbindungen,
dadurch gekennzeichnet, daß nach der Herstellung der titanhaltigen Feststoffkomponente a) das in der Suspension vorliegende inerte Lösungsmittel dadurch entfernt wird, daß man zunächst in einem ersten Schritt die Suspension filtriert und anschließend in einem zweiten Schritt durch Anlegen eines Druckunterschiedes bei Temperaturen von nicht mehr als 100°C dem filtrierten Material weiteres Lösungsmittel entzieht, wobei die Filtration der Suspension im ersten Schritt unter Verwendung eines Metallpanzertressengewebes als Siebgewebe mit einer Maschenweite von 10 bis 30 µm durchgeführt wird.

2. Verfahren nach Anspruch 1, dadurch gekennzeichnet, daß die Filtration im ersten Schritt durch Anlegen eines Stickstoffstromes mit einem Überdruck von 1 bis 5 bar durchgeführt wird.

3. Verfahren nach den Ansprüchen 1 oder 2, dadurch gekennzeichnet, daß im zweiten Schritt das Lösungsmittel durch Anlegen eines Unterdrucks von 5 bis 500 mbar und bei einer Temperatur von 20 bis 100°C destillativ entfernt wird.

4. Verfahren nach Anspruch 3, dadurch gekennzeichnet, daß im zweiten Schritt das Lösungsmittel bei einem Unterdruck von 50 bis 450 mbar und bei einer Temperatur vcn 30 bis 70°C entfernt wird.

5. Verfahren nach einem der Ansprüche 3 oder 4, dadurch gekennzeichnet, daß die zum Anlegen des Unterdrucks erforderliche Druckabsenkung in wenigstens zwei Teilschritten über einen Zeitraum von insgesamt 1 bis 10 Stunden erfolgt.

6. Verfahren nach einem der Ansprüche 1 oder 2, dadurch gekennzeichnet, daß im zweiten Schritt das Lösungsmittel in der Weise entfernt wird, daß man einen auf 30 bis 70°C geheizten Inertgasstrom von oben her durch die lösungsmittelhaltige Feststoffkcmponente a) drückt.

7. Verfahren nach einem der Ansprüche 1 oder 2, dadurch gekennzeichnet, daß im zweiten Schritt das Lösungsmittel dadurch entfernt wird, daß man durch Anlegen eines Inertgasstromes mit einem Überdruck von 1 bis 5 bar diesen gegen den Anströmboden eines Wirbelrohrs, in welchem sich die lösungsmittelhaltige Feststoffkomponente a) befindet, bläst.

8. Verfahren nach einem der Ansprüche 6 oder 7, dadurch gekennzeichnet, daß der zweite Schritt zur Entfernung des Lösungsmittels mit Stickstoff als Inertgas ausgeführt wird.

9. Verfahren nach einem der Ansprüche 7 cder 8, dadurch gekennzeichnet, daß im zweiten Schritt das Inertgas mit einer Geschwindigkeit von 5 bis 100 cm/sek dem Anströmboden zugeführt wird.

## Claims

1. A process for the preparation of catalyst systems of the Ziegler-Natta catalyst type, containing, as active constituents,
a) a titanium-containing solid component which, in addition to a compound of titanium, also contains at least one electron-donor compound and is in the form of a suspension in an inert solvent, and, as cocatalyst,
b) an aluminum compound and
c) if desired further electron-donor compounds,
which comprises, after preparation of the titanium-containing solid component a), removing the inert solvent in the suspension by firstly, in a first step, filtering the suspension and subsequently, in a second step, removing further solvent from the filtered material by applying a pressure difference at not above 100°C, where the filtration of the suspension in the first step is carried out using a metallized braid fabric as screen cloth having a mesh width of from 10 to 30 µm.

2. A process as claimed in claim 1, wherein the filtration in the first step is carried out by applying a nitrogen stream having a pressure of from 1 to 5 bar gage.

3. A process as claimed in claim 1 or 2, wherein, in the second step, the solvent is removed by distillation at from 20 to 100°C by applying a reduced pressure of from 5 to 500 mbar.

4. A process as claimed in claim 3, wherein, in the second step, the solvent is removed at from 30 to 70°C at a reduced pressure of from 50 to 450 mbar.

5. A process as claimed in claim 3 or 4, wherein the pressure reduction necessary in order to apply the reduced pressure takes place in at least two sub-steps over a total period of from 1 to 10 hours.

6. A process as claimed in claim 1 or 2, wherein, in the second step, the solvent is removed by forcing an inert-gas stream heated to from 30 to 70°C through the solvent-containing solid component a) from the top.

7. A process as claimed in claim 1 or 2, wherein, in the second step, the solvent is removed by blowing a stream of inert gas having a pressure of from 1 to 5 bar gage; against the baffle plate of a cyclone tube in which the solvent-containing solid component a) is located.

8. A process as claimed in claim 6 or 7, wherein the second step for removing the solvent is carried out using nitrogen as the inert gas.

9. A process as claimed in claim 7 or 8, wherein, in the second step, the inert gas is fed to the baffle plate at a velocity of from 5 to 100 cm/sec.

## Revendications

1. Procédé pour la préparation de systèmes de catalyseurs du type des catalyseurs de Ziegler-Natta, contenant comme constituants actifs
a) un composant solide contenant du titane, qui contient en plus d'un composé du titane encore au moins un composé donneur d'électrons et se présente sous la forme d'une suspension dans un solvant inerte, ainsi que comme co-catalyseur
b) un composé d'aluminium et
c) éventuellement d'autres composés donneurs d'électrons,
caractérisé par le fait que, après la préparation du composant solide contenant du titane a), on élimine le solvant inerte se trouvant dans la suspension, d'abord en filtrant la suspension dans une première étape et ensuite, dans une deuxième étape, en extrayant le reste du solvant de la matière filtrée par application d'une différence de pression à des températures ne dépassant pas 100°C, tandis que la filtration de la suspension dans la première étape est effectuée avec utilisation d'un tissu de tresses armées métalliques en tant que tissu de tamisage ayant une ouverture de mailles de 10 à 30 µm.

2. Procédé selon la revendication 1, caractérisé par le fait que la filtration dans la première étape est effectuée par établissement d'un courant d'azote avec une surpression de 1 à 5 bar.

3. Procédé selon les revendications 1 ou 2, caractérisé par le fait que dans la deuxième étape le solvant est éliminé par distillation par application d'une dépression de 5 à 500 mbar et à une température de 20 à 100°C.

4. Procédé selon la revendication 3, caractérisé par le fait que dans la deuxième étape le solvant est éliminé par une dépression de 50 à 450 mbar et à une température de 30 à 70°C.

5. Procédé selon l'une des revendications 3 ou 4, caractérisé par le fait que l'abaissement de pression nécessaire pour l'établissement de la dépression s'effectue en au moins deux étapes partielles s'étendant sur une durée de 1 à 10 heures au total.

6. Procédé selon l'une des revendications 1 ou 2, caractérisé par le fait que dans la deuxième étape le solvant est éliminé par application, sous pression et par le haut, d'un courant de gaz inerte chauffé à 30 à 70°C, à travers le composant solide a) contenant le solvant.

7. Procédé selon l'une des revendications 1 ou 2, caractérisé par le fait que dans la deuxième étape le solvant est éliminé par soufflage par application d'un courant de gaz inerte avec une dépression de 1 à 5 bar de celui-ci contre le fond de soufflage d'un tube à cyclone, dans lequel se trouve le composant solide a) contenant le solvant.

8. Procédé selon l'une des revendications 6 ou 7, caractérisé par le fait que la deuxième étape pour l'élimination du solvant est effectuée avec de l'azote comme gaz inerte.

9. Procédé selon l'une des revendications 7 ou 8, caractérisé par le fait que dans la deuxième étape le gaz inerte est introduit dans le fond de soufflage à une vitesse de 5 à 100 cm/s.
